# EUROPEAN PATENT SPECIFICATION

(11) **EP 1 394 654 B1**
(45) Date of publication and mention of the grant of the patent: **22.06.2005**
(21) Application number: 02019427.0
(22) Date of filing: 30.08.2002
(51) Int. Cl.: G06F 1/00, H04L 9/08

(54) **A method and apparatus for securely accessing data or functionality of a device**
Verfahren und Vorrichtung für sicheren Zugriff auf Daten oder Funktionalität eines Gerätes
Méthode et appareil pour accéder de façon sécurisée à des données ou des fonctionalités d'un dispositif

(43) Date of publication of application: 03.03.2004
(73) Proprietor: SIEMENS AKTIENGESELLSCHAFT, 80333 München (DE)
(72) Inventor: Dobbelsteen, Jan, 5613 LJ Eindhoven (NL); Rudolph, Martin, Dr., 35585 Wetzlar (DE)

(56) References cited:
- US-A- 5 530 753
- US-A- 5 970 147
- US-A- 6 047 258
- US-A1- 2002 021 805
- US-A1- 2002 069 360

## Description

The invention relates to a method for providing cryptographically secure, user-friendly and time-related access to data and/or functionalities of a technical device system such as has been furthermore recited in the preamble of Claim 1. A general problem in the software industry is to protect high-value programs and other functions and facilities against illegal access by potentially malevolent users, and various procedures to such effect have been proposed.

US 5,970,147 A discloses a system and a method for configuring and registering a cryptographic device. In a configuration phase of the method the cryptographic device initially receives a unique device serial number from a programming mechanism which is stored in the device and in a database. The device produces random numbers used for generating a unique symmetric key and a public/private key pair. The public key is exported to the database without undergoing any modification whereas the private key is encrypted using the unique symmetric key prior to exporting it to the database. The cryptographic device is later registered to the database over a communication link by transmission of a message including the device serial number. The public key and the encrypted private key stored in the database selected in accordance with the device serial number are transmitted to the device over the communication link. The cryptographic device can decrypt the encrypted private key with its unique symmetric key and is then functional to support public-key cryptography.

In the general ambit of the present invention, an earlier Patent Application EP-A1-1 139 064 to the present assignee has recognized various advantages in protecting a storage medium that may contain road maps and the like through the usage of enciphered PIN codes and keys. The present inventors have however recognized the appreciable advantages of the developing and the providing of various sensitive data of the security structure already in the manufacturing stage of the technical device in question through interfacing to a so-called backbone facility.

In consequence, amongst other things, it is an object of the present invention to start the developing of the security structure for the technical device in question in an early and pre-usage stage of the device through complementing it with the aforesaid backbone facility.

Now therefore, according to one of its aspects the invention is characterized by outputting selective access keys by way of distribution through a central backbone facility according to the following steps:
- in a pre-usage stage of the technical device generating a random value in said backbone facility and loading the random value into the technical device;
- in the technical device then generating a communication key on the basis of the random value received and a cryptographically procedure;
- transferring the communication key and a Device Identification Number assigned to the technical device under usage of a further cryptographical procedure to the backbone facility in the form of a registration key (50) and storing the communication key and the Device Identification Number in the backbone facility (58);
- in a subsequent usage stage of the technical device, effecting sign-up with the backbone facility through transferring the Device Identification Number for therewith selecting the communication key stored in the backbone facility and encrypting access options with the communication key for therewith providing said access keys.

Generally, the access is rendered cryptographically secure, user-friendly, time-related, and individual to a particular device. In particular, the access may be time-restricted.

In particular, the invention provides a selective relinquishing procedure for the aforesaid access through entering a relinquishing key into the terminal, whereupon the technical device will calculate an acknowledging key for subsequent entering into the backbone facility.

A preferred method according to the invention is characterized in that said backbone facility is operative for reading said registration key, for decoding said registration key, and for on the basis of said decoding, storing the received communication key and the Device Identification Number.

Such method may further be characterized in that an access key is generated in said backbone facility through receiving the Device Identification Number, followed by selecting of one or more access options and including time-related parametrization, encrypting the access options through a device-specific communication key, and outputting the resulting access key(s).

Such method may in particular be characterized in that said access key is entered into the device and thereupon decoded with a device-specific communication key and in case of positive validity thereof stored, whilst checking any appropriate validity time interval.

According to another aspect of the invention, said pre-usage stage is effected along with manufacturing of the device.

A method according to the invention is preferably characterized in that said communication key is transferred through a variant on the Diffie-Hellmann procedure.

Such preferred method may be characterized by the use of one or more elliptic curves for said transferring.

Another preferred method according to the invention is being characterized in that the access options are acquired through one or more user interfaces of the backbone facility that can be directly or indirectly reached by Internet, FAX, telephone, or call-centre, whilst applying a further symmetrical procedure.

A preferred method according to the invention may alternatively be characterized by a selective relinquishing procedure through entering a relinquishing key into the terminal, whereupon the the technical device will calculate an acknowledging key for subsequent entering into the backbone facility.

Yet another preferred method according to the invention is being characterized by allowing interfacing to an updating data carrier provided with a digital signature that will be checked before effectively downloading into the technical device.

Further advantageous aspects of the invention are recited in dependent Claims.

These and further aspects and advantages of the invention will be discussed more in detail hereinafter with reference to the disclosure of preferred embodiments, and in particular with reference to the appended Figures that show:
- Figure 1,: a block diagram of a backbone facility embodiment;
- Figure 2a, 2b,: a block diagram and dialog organization during manufacture;
- Figure 3,: a flow chart of the manufacture process;
- Figure 4,: a flow chart of the process for decoding the device-specific registration key;
- Figure 5,: a flow chart of the process for generating access keys in the backbone facility;
- Figure 6,: a flow chart of the process for entering the access keys into the device;
- Figure 7,: a flow chart of the process for returning selected access options.

The present disclosure presents a continual process and a system that provide access to data and/or functions which reside in technical devices. The access is cryptographically secure, user-friendly, time-related, and individual to a particular device. In particular, the access may be time-restricted. The access is provided through the distribution of access keys through a so-called central backbone facility. An on-line link to the terminal is not necessary per se. However, in case of a connected telematics device, the transfer operations of the procedure are possible without problems or changes. A particular instance of the technical devices are navigation systems, which generally comprise mass storage such as in the form of a CD or DVD drive, wherein the procedure of the present invention would provide access to the data and/or functions in such mass storage. The end user would advantageously have to pay license fees only for the data actually used.

The procedure relies on device-specific and symmetrically encrypted access options, where the corresponding device-specific communication keys should be kept secret and are stored and managed in the central data bank of the backbone facility.

The communication key is generated by the device during manufacture. For the internal generation of the key, a "random" seed value is required. To ensure the entropy of the seed value for similar or corresponding production lines that under particular circumstances may be running in parallel with each other, the random value is presented by the backbone facility itself, and is loaded through an external interface into the technical device that is being manufactured. Various further-device internal random values may be retrieved as well for improved security.

After generation thereof, the communication key of the device that must be kept secret is transferred through a variant on the well-known Diffie-Hellmann procedure as disclosed in US Patent 4,200,770. In particular, the preferred procedure applies elliptic curves as disclosed in V. Miller, "Uses of Elliptic Curves in Cryptography", Advances in CRYPTO 1985, Lecture Notes in Computer Science 218, Springer-Verlag, 1986, and is transferred in the form of a registration key to the backbone facility. This particular procedure is used in preference over using the RSA algorithm discussed in Ronald L. Rivest, Adi Shamir, and Leonard M. Adleman, "A method for Obtaining Digital Signatures and Public-Key Systems", Communications of the ACM 21, 2, Feb. 1978, pp. 120-126. The advantage of the above elliptic curves resides in their high efficiency, and furthermore in the possibility that substantially shorter keys may be used in comparison to RSA whilst meeting the same security requirements. Furthermore, without compromising the security offered by the procedure of the present invention, the user may after purchasing the device, transfer the registration key to the backbone facility.

By having the registration key transferred during the manufacture already, the user will experience a simplified procedure. In fact, the protocol presently selected requires a 33-character key only.

Now in operation, the user must effect registration of the device with the backbone facility. For the identification of the device, an eight-position device specific **DIN**/**D**evice **I**dentification **N**umber is used that is transferred together with the registration key, and through which assigning to the device and thereby to the communication key stored in the backbone facility is made possible.

Acquiring the access options is effected through various user interfaces of the backbone facility that can be reached by the user, either directly via Internet, or indirectly through FAX, telephone, or Call-centre. Encrypting the access options is effected through a known symmetrical procedure that meets the security requirements, such as disclosed by B. Schneier, "Description of a New Variable-Length Key, 64-Bit Block Cipher (Blowfish)"; Fast Software Encryption, Cambridge Security Workshop Proceedings, December 1993, Springer-Verlag, 1994. The particular key lengths may be adapted to the actually applicable general advance of technology.

An access key is used with 80 bit length, wherein 60 bits serve for transferring the options, and 20 bits serve as a check sum. The check sum reduces the residual probability for getting accidental access to less than one in 10⁶. For additional security, the terminal device will be blocked after ***n*** erroneous user inputs.

The access may in accordance with customer requirements be time-restricted, or rather be for an unlimited time period. After inputting the access key into the terminal device, the device-specific key will be decrypted and accordingly be processed further internally. With this key, data accesses such as to particular sections of a digitized geographical map, or software accesses to specific software functions may be granted.

The customer has the possibility for in accordance with legal requirements relinquishing certain options from the purchased device even if they had been entered already. For doing this, the user must enter a request for a "relinquishing key" through the interface provided in the backbone facility and enter it into the terminal. Said relinquishing key is alternatively indicated as "revocation key" and is encrypted with the device specific communication key like an access-key. After such input request, the device will automatically calculate an "acknowledging key", and will display it on an attached output device. Subsequently, the acknowledging key must through a user interface be entered in to the backbone facility. After positive decryption and a check of the contents, the associated remaining options after the relinquishing of certain options can be evaluated and communicated to the customer.

In case there is a possibility for replacement of operational software of the device, additional security mechanisms are necessary to prevent misuse. In particular, the software update data carrier may be provided with a digital signature that will be checked before loading into the internal storage of the device. Furthermore, sensitive data items on the mass storage may be provided as well with a digital signature against falsification.

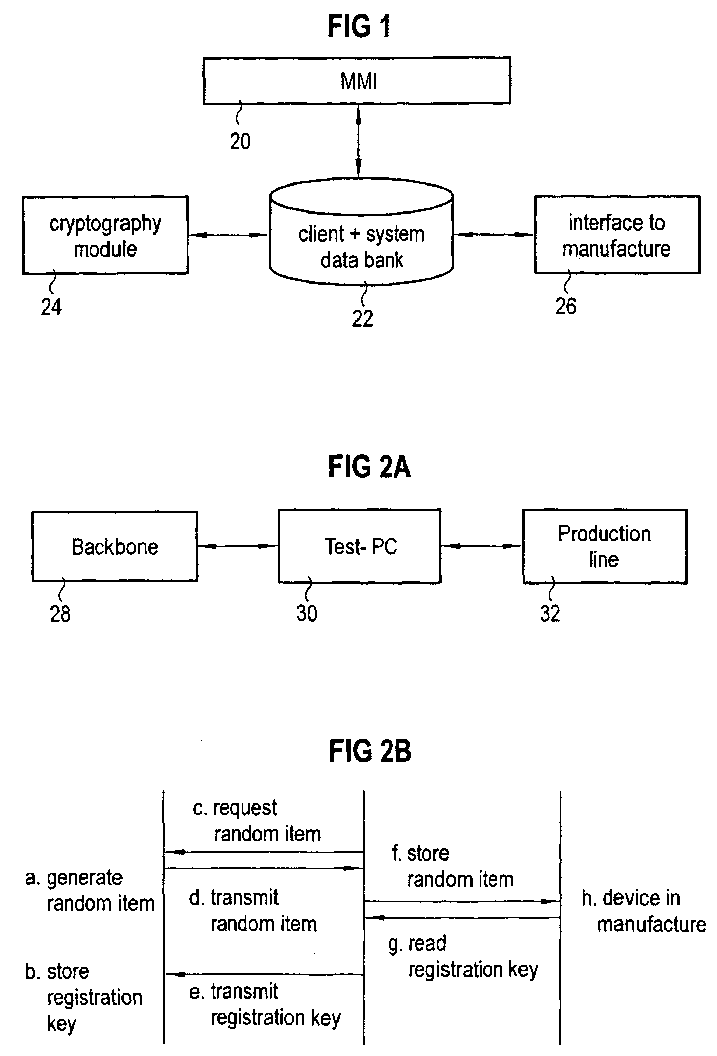

Figure 1 illustrates a block diagram of a backbone facility. Herein, block 20 represents the human interface facilities that may include speech, keyboard, mouse, and screen facilities as are commonly used in the art. Block 22 represents a data bank with customer files and system files. Block 24 represents a cryptographical module, and block 26 represents an interface to the physical manufacture organization of the intended device. The functionality of the various blocks and interconnections will be further discussed hereinafter.

Figures 2a, 2b illustrate a block diagram and a dialog organization during manufacture. Block 28 generally represents in a simplified manner the backbone facility shown in Figure 1. Block 30 represents a manufacturing test PC that is interfaced to the backbone facility, and furthermore interfaced to various items featured in the manufacturing product line not shown here for brevity. Furthermore, in the dialog organization of Figure 2b, the backbone facility 28 will generate a random pattern. The manufacturing test PC 30 will request such random pattern and subsequently get it transmitted from the backbone facility. With respect to the device-in-manufacture, it will allow for storing the random pattern, supra, and will furthermore allow to read the registration key by the manufacturing test PC 30. Finally, the manufacturing test PC 30 wil transfer the registration key to the backbone facility 28 for storage in the latter.

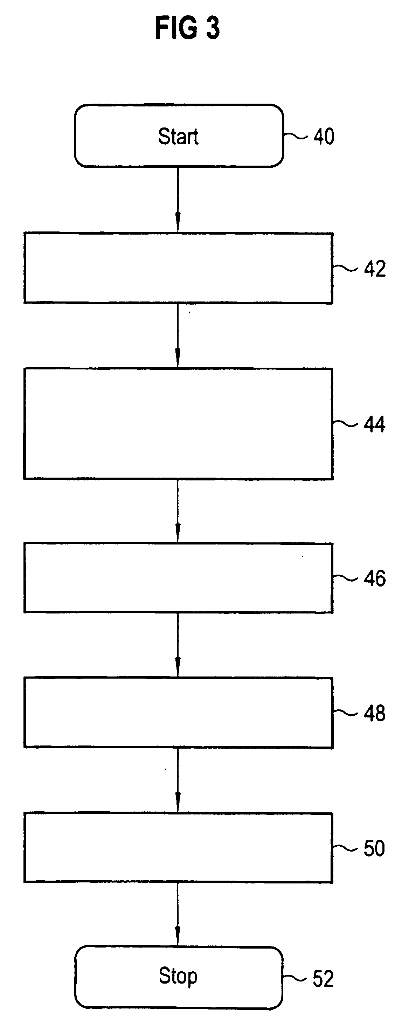

Figure 3 illustrates a flow chart of the manufacture process. In start block 40, the necessary hardware and software facilities are assigned. All subsequent flow charts will have such start block that in consequence has been discussed only once for brevity. In block 42, the system loads the random pattern Z through an external interface from the test PC. In block 44, the system initialyzes the random pattern generator through using the random pattern Z received, and through also using "random parameters" that are internal to the device. In block 46, the system generates the communication key, and the DIN. In block 48, the system generates the registration key. In block 50, the system outputs the registration key. In block 52, the procedure terminates, and appropriately, hardware and software facilities that are no longer necessary are relinquished. As shown, the diagram has been simplified. For example, no other exit has been shown than the one at completion of the procedure. It should be clear however to persons skilled in the art that further facilities, such as supplementary ways out would be provided, but such has nor been discussed for brevity.

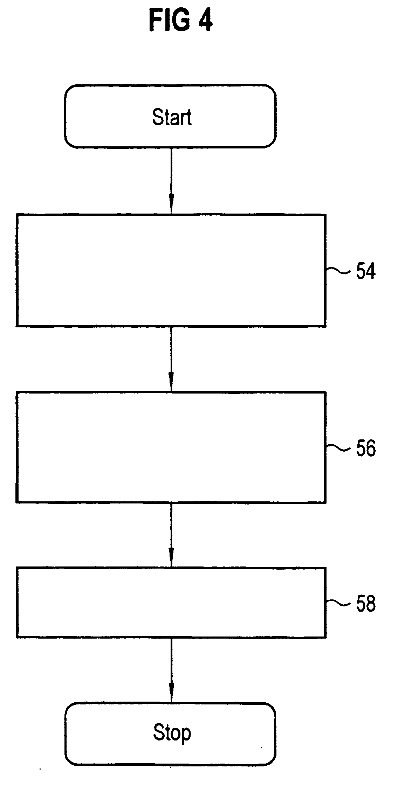

Figure 4 illustrates a flow chart of the process for decoding the device-specific registration key. In block 54, the system reads the registration key. In block 56, the system decodes the registration key. In block 58, the system stores the communication key and the DIN.

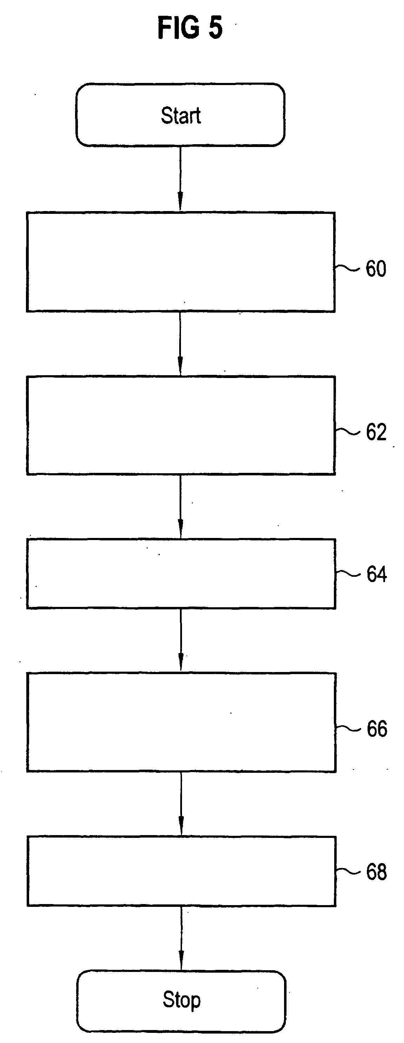

Figure 5 illustrates a flow chart of the process for generating access keys in the backbone facility. In block 60, the user person signs-up through inputting of the DIN. In block 62, the user selects the required access options with start and termination dates. In block 64, the system formats the access options. In block 66, the system encrypts the access options with the device-specific communication key. In block 68, the system displays the acess key.

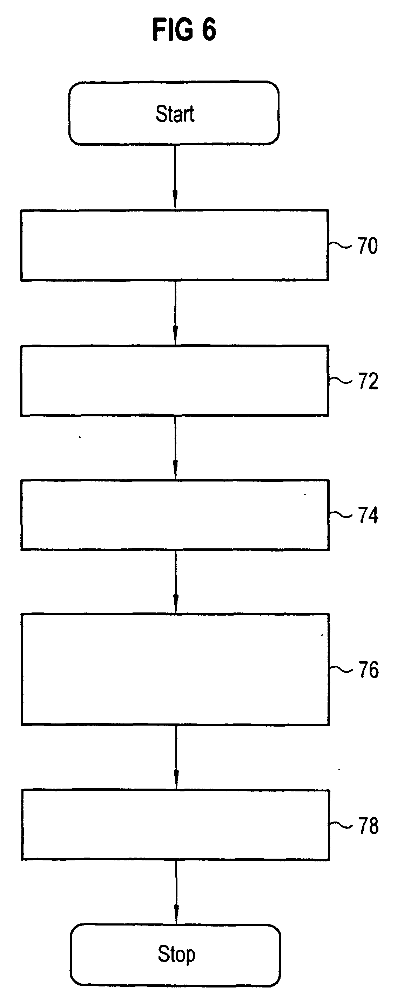

Figure 6 illustrates a flow chart of the process for entering the access keys into the device. In block 70, the system presents an input mask for the access key(s). In block 72, the user inputs the access key. In block 74, the system decodes the access key through using the device-specific communication key. In block 76, the system in case of a "valid" key stores the options. In block 78, the system checks the validity time interval and grants access accordingly. The options and their validity time intervals (encrypted in the access-key) are displayed to the user in the MMI of the navigation system (if it is a valid access-key).

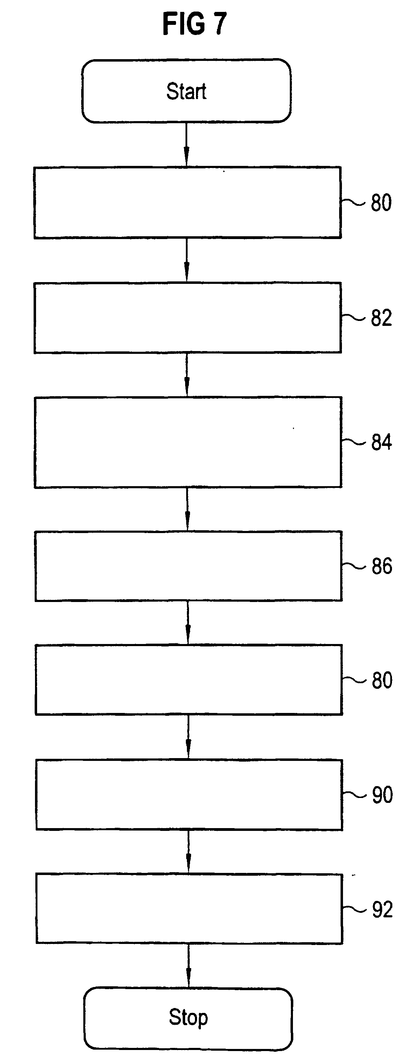

Figure 7 illustrates a flow chart of the process for returning or relinquishing one or more of the access options. In block 80, the device reports to the backbone facility through presenting the DIN discussed earlier. In block 82, the user will select the options for relinquishing, such as through selecting in a menu. In block 84, the relinquishing key is calculated and displayed. In block 86, the relinquishing key is entered in the technical device, and checked for correctness. In block 88, the acknowledge key is calculated and displayed. In block 90, the backbone facility reports back whilst using the DIN and inputting of the acknowledge key. Finally, in block 92, the acknowledge key is checked and if positive, the remaining scope of the access to data and/or programs is set.

Now, the invention has been disclosed with reference to the Figures in connection with the disclosure of preferred embodiments. However, persons skilled in the art will readily recognize various amendments, modifications, and combinations. Therefore, the above disclosure should not be considered as limitative, but rather illustrative, and the due scope of the present invention should be determined from the scope of the Claims appended hereto.

## Claims

1. A method for providing cryptographically secure and user-friendly time-related access to data and/or one or more functionalities of a device, said method being **characterized by** outputting selective access keys by way of distribution through a central backbone facility (28) according to the following steps:
• in a pre-usage stage of the device generating a random value in said backbone facility and loading the random value (42) into the device;
• in the technical device then generating a communication key (46) on the basis of the random value received and a cryptographically procedure;
• transferring the communication key and a Device Identification Number assigned to the device under usage of a further cryptographical procedure to the backbone facility in the form of a registration key (50) and storing the communication key and the Device Identification Number in the backbone facility (58);
• in a subsequent usage stage of the device, effecting sign-up with the backbone facility through transferring the Device Identification Number for therewith selecting the communication key stored in the backbone facility and encrypting access options with the communication key for therewith providing said access keys.

2. A method as claimed in Claim 1, being **characterized in that** said backbone facility is operative for reading said registration key (54), for decoding said registration key (56), and for on the basis of said decoding, storing the received communication key and the Device Identification Number (58).

3. A method as claimed in Claim 2, being **characterized in that** an access key is generated in said backbone facility through receiving the Device Identification Number (60), followed by selecting of one or more access options and including time-related parametrization (62), encrypting the access options through a device-specific communication key (66), and outputting the resulting access key(s)(68).

4. A method as claimed in Claim 3, being **characterized in that** said access key is entered into the device (72) and thereupon decoded with a device-specific communication key (74) and in case of positive validity thereof stored, whilst checking any appropriate validity time interval (78).

5. A method as claimed in Claim 1, being **characterized in that** said access is time-restricted.

6. A method as claimed in Claim 1, being **characterized in that** said pre-usage stage is effected along with manufacturing of the device.

7. A method as claimed in Claim 1, being **characterized in that** said communication key is transferred through a variant on the Diffie-Hellmann procedure.

8. A method as claimed in Claim 7, being **characterized** through using one or more elliptic curves for said transferring.

9. A method as claimed in Claim 1, being **characterized in that** the access options are acquired through one or more user interfaces of the backbone facility that can be directly or indirectly reached by Internet, FAX, telephone, or call-centre, whilst applying a further symmetrical procedure.

10. A method as claimed in claim 1, being **characterized by** a selective relinquishing procedure through entering a relinquishing key into the terminal (86), whereupon the the technical device will calculate an acknowledging key (88) for subsequent entering into the backbone facility (90).

11. A method as claimed in Claim 1, being **characterized by** allowing interfacing to an updating data carrier provided with a digital signature that will be checked before effectively downloading into the technical device.

## Patentansprüche

1. Verfahren zur Bereitstellung eines kryptographisch sicheren und benutzerfreundlichen zeitbezogenen Zugangs zu Daten und/oder einer oder mehr Funktionalitäten einer Einrichtung, wobei das Verfahren durch Ausgeben selektiver Zugangsschlüssel mittels Verteilung durch eine zentrale Backbone-Vorrichtung (28) gemäß den folgenden Schritten **gekennzeichnet** ist:
In einer Stufe vor der Benutzung der Einrichtung, Erzeugen eines Zufallswerts in der Backbone-Vorrichtung und Laden des Zufallswerts (42) in die Einrichtung;
in der technischen Einrichtung dann Erzeugen eines Kommunikationsschlüssels (46) auf der Basis des empfangenen Zufallswerts und einer kryptographischen Prozedur;
Transferieren des Kommunikationsschlüssels und einer Einrichtungsidentifikationsnummer, die der Einrichtung unter Verwendung einer weiteren kryptographischen Prozedur zugewiesen wird, zu der Backbone-Vorrichtung in Form eines Registrationsschlüssels (50) und Speichern des Kommunikationsschlüssels und der Einrichtungsidentifikationsnummer in der Backbone-Vorrichtung (58);
in einer nachfolgenden Benutzungsphase der Einrichtung, Bewirken eines Sign-up bei der Backbone-Vorrichtung durch Transferieren der Einrichtungsidentifikationsnummer, um damit den in der Backbone-Vorrichtung gespeicherten Kommunikationsschlüssel zu wählen, und Verschlüsseln von Zugangsoptionen mit dem Kommunikationsschlüssel, um damit die Zugangsschlüssel bereitzustellen.

2. Verfahren nach Anspruch 1, **dadurch gekennzeichnet, daß** die Backbone-Vorrichtung für folgendes wirkt: Lesen des Registrationsschlüssels (54), Decodieren des Registrationsschlüssels (56) und, auf der Basis der Decodierung, Speichern des empfangenen Kommunikationsschlüssels und der Einrichtungsidentifikationsnummer (58).

3. Verfahren nach Anspruch 2, **dadurch gekennzeichnet, daß** in der Backbone-Vorrichtung durch Empfangen der Einrichtungsidentifikationsnummer (60) ein Zugangsschlüssel erzeugt wird, gefolgt von Auswählen einer oder mehrerer Zugangsoptionen und einschließlich zeitbezogener Parametrisierung (62), wobei die Zugangsoptionen durch einen einrichtungsspezifischen Kommunikationsschlüssel (66) verschlüsselt und der resultierende Zugangsschlüssel bzw. die resultierenden Zugangsschlüssel (68) ausgegeben wird bzw. werden.

4. Verfahren nach Anspruch 3, **dadurch gekennzeichnet, daß** der Zugangsschlüssel in die Einrichtung (72) eingegeben und daraufhin mit einem einrichtungsspezifischen Kommunikationsschlüssel (74) decodiert und im Fall seiner positiven Gültigkeit gespeichert wird, wobei ein etwaiges entsprechendes Gültigkeitszeitintervall (78) geprüft wird.

5. Verfahren nach Anspruch 1, **dadurch gekennzeichnet, daß** der Zugang zeitbeschränkt ist.

6. Verfahren nach Anspruch 1, **dadurch gekennzeichnet, daß** die Vorbenutzungsphase zusammen mit der Herstellung der Einrichtung umgesetzt wird.

7. Verfahren nach Anspruch 1, **dadurch gekennzeichnet, daß** der Kommunikationsschlüssel durch eine Variante der Diffie-Hellmann-Prozedur transferiert wird.

8. Verfahren nach Anspruch 7, **gekennzeichnet durch** Verwendung einer oder mehrerer elliptischer Kurven für den Transfer.

9. Verfahren nach Anspruch 1, **dadurch gekennzeichnet, daß** Zugangsoptionen durch eine oder mehrere Benutzerschnittstellen der Backbone-Vorrichtung beschafft werden, die direkt oder indirekt per Internet, Fax, Telefon, oder Anrufzentrale erreicht werden können, während eine weitere symmetrische Prozedur angewandt wird.

10. Verfahren nach Anspruch 1, **gekennzeichnet durch** eine selektive Abgabeprozedur **durch** Eingeben eines Abgabeschlüssels in das Terminal (86), woraufhin die technische Einrichtung einen Bestätigungsschlüssel (88) zur nachfolgenden Eingabe in die Backbone-Vorrichtung (90) berechnet.

11. Verfahren nach Anspruch 1, **gekennzeichnet durch** Anschaltung an einen aktualisierenden Datenträger, der mit einer digitalen Signatur ausgestattet ist, die vor dem effektiven Herunterladen in die technische Einrichtung geprüft wird.

## Revendications

1. Procédé pour assurer un accès cryptographiquement sécurisé, convivial et temporel aux données et/ou à une ou plusieurs fonctionnalités d'un dispositif, ledit procédé étant **caractérisé en ce qu'**il délivre en sortie des clés d'accès sélectives au moyen d'une distribution par l'intermédiaire d'une installation de base centrale (28) conformément aux étapes suivantes:
• lors d'une phase de préutilisation du dispositif, générer une valeur aléatoire dans ladite installation de base et charger la valeur aléatoire (42) dans le dispositif;
• dans le dispositif technique, générer ensuite une clé de communication (46) sur la base de la valeur aléatoire reçue et d'une procédure cryptographique;
• transférer à l'installation de base la clé de communication et un Numéro d'Identification de Dispositif attribué au dispositif au moyen de l'utilisation d'une autre procédure cryptographique sous la forme d'une clé d'enregistrement (50) et stocker la clé de communication et le Numéro d'Identification de Dispositif dans l'installation de base (58);
• lors d'une phase d'utilisation ultérieure du dispositif, effectuer l'ouverture de session avec l'installation de base en transférant le Numéro d'Identification de Dispositif pour sélectionner ainsi la clé de communication stockée dans l'installation de base et crypter les options d'accès à l'aide de la clé de communication pour fournir ainsi lesdites clés d'accès.

2. Procédé selon la revendication 1, **caractérisé en ce que** ladite installation de base fonctionne pour lire ladite clé d'enregistrement (54), pour décoder ladite clé d'enregistrement (56) et, sur la base dudit décodage, pour stocker la clé de communication reçue et le Numéro d'Identification de Dispositif (58).

3. Procédé selon la revendication 2, **caractérisé en ce qu'**une clé d'accès est générée dans ladite installation de base par la réception du Numéro d'Identification de Dispositif (60), suivie par la sélection d'une ou plusieurs options d'accès et en incluant un paramétrage temporel (62), le cryptage des options d'accès par l'intermédiaire d'une clé de communication spécifique au dispositif (66), et la sortie de la ou des clé(s) d'accès résultantes (68).

4. Procédé selon la revendication 3, **caractérisé en ce que** ladite clé d'accès est entrée dans le dispositif (72) et est décodée par après à l'aide d'une clé de communication spécifique au dispositif (74), et est stockée, dans le cas de sa validité positive, tout en vérifiant un quelconque intervalle de temps de validité approprié (78).

5. Procédé selon la revendication 1, **caractérisé en ce que** ledit accès est limité dans le temps.

6. Procédé selon la revendication 1, **caractérisé en ce que** ladite phase de préutilisation est effectuée en même temps que la fabrication du dispositif.

7. Procédé selon la revendication 1, **caractérisé en ce que** ladite clé de communication est transférée par l'intermédiaire d'une variante de la procédure de Diffie-Hellmann.

8. Procédé selon la revendication 7, **caractérisé par** l'utilisation d'une ou plusieurs courbes elliptiques pour ledit transfert.

9. Procédé selon la revendication 1, **caractérisé en ce que** les options d'accès sont acquises par l'intermédiaire d'une ou plusieurs interfaces utilisateur de l'installation de base que l'on peut atteindre directement ou indirectement par Internet, FAX, téléphone, ou un centre d'appel, tout en appliquant une autre procédure symétrique.

10. Procédé selon la revendication 1, **caractérisé par** u ne procédure d'abandon sélective par l'intermédiaire de l'introduction d'une clé d'abandon dans le terminal (86), après quoi le dispositif technique calculera une clé d'accusé de réception (88) pour entrer ultérieurement dans l'installation de base (90).

11. Procédé selon la revendication 1, **caractérisé par** l'étape consistant à permettre l'interfaçage avec un support de données de mise à jour muni d'une signature numérique qui sera vérifiée avant son chargement effectif dans le dispositif technique.
